# EUROPEAN PATENT SPECIFICATION

(11) **EP 3 785 911 B1**
(45) Date of publication and mention of the grant of the patent: **09.04.2025**
(21) Application number: 19874350.2
(22) Date of filing: 18.10.2019
(51) Int. Cl.: H01M 50/10, H01M 50/141, H01M 50/105

(54) **FILM FOR PACKAGING SECONDARY BATTERY AND SECONDARY BATTERY COMPRISING THE SAME**
FOLIE ZUM VERPACKEN EINER SEKUNDÄRBATTERIE UND SEKUNDÄRBATTERIE DAMIT
FILM POUR EMBALLER UNE BATTERIE SECONDAIRE ET BATTERIE SECONDAIRE LE COMPRENANT

(30) Priority: 19.10.2018 KR 20180125541
(43) Date of publication of application: 03.03.2021
(73) Proprietor: LG Energy Solution, Ltd., Seoul 07335 (KR)
(72) Inventor: KWON, Yo-Han, Daejeon 34122 (KR); LIM, Joonwon, Daejeon 34122 (KR); UHM, In-Sung, Daejeon 34122 (KR); LEE, Jae-Hyun, Daejeon 34122 (KR)
(74) Representative: Hoffmann Eitle
(86) International application number: PCT/KR2019/013790
(87) International publication number: WO 2020/080905

(56) References cited:
- EP-A1- 2 822 059
- WO-A1-2016/178117
- JP-A- 2013 222 555
- JP-A- 2016 213 190
- KR-A- 20090 008 086
- KR-A- 20160 100 605
- KR-A- 20170 032 546
- US-A1- 2017 256 817
- US-B2- 9 969 682

## Description

### TECHNICAL FIELD

The present disclosure relates to a film for packaging a secondary battery and a secondary battery comprising the same.

### BACKGROUND ART

Secondary batteries are designed to convert external electrical energy in the form of chemical energy and stores it, and when necessary, produce electricity. Since they can be charged many times, they are also known as "rechargeable batteries". Commonly used secondary batteries include lead-acid batteries, NiCd batteries, NiMH batteries, Li-ion batteries and Li-ion polymer batteries. Secondary batteries provide both economical and environmental advantages, compared to disposable primary batteries.

Secondary batteries are currently used in low power applications. For example, the range of applications may include devices that help starting a car, mobile devices, tools and uninterruptible energy systems. Recently, development of wireless communication technology leads to the widespread use of mobile devices, and with a tendency to wirelessize many types of existing devices, the demand for secondary batteries is dramatically increasing. Additionally, in keeping with environmental pollution prevention, the use of hybrid electric vehicles and electric vehicles is widespread, and these next-generation vehicles adopt technology using secondary batteries to reduce the price and weight and increase the life.

Known types of secondary batteries are cylindrical, prismatic and pouch-type secondary batteries, and recently, cable-type secondary batteries having a very high ratio of length to cross sectional diameter as well as flexible secondary batteries featuring flexibility have been suggested. Document WO 2016/178117 A1 discloses an example for a pouch-type secondary battery.

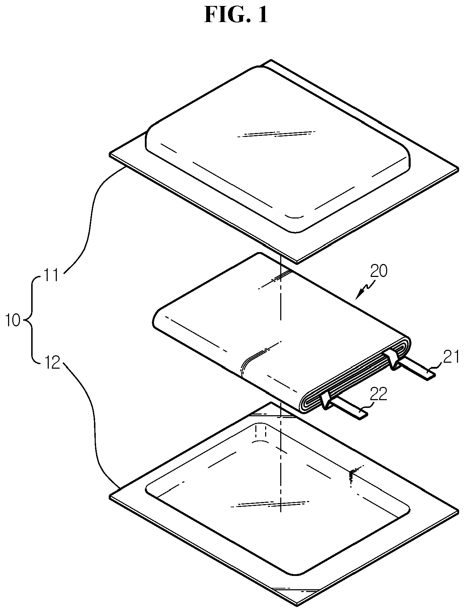

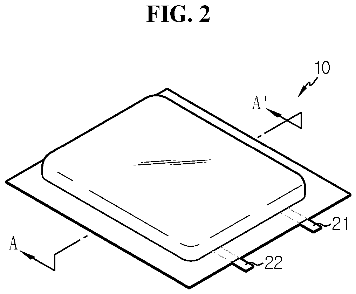

FIGS. 1 to 3 show an embodiment of a general pouch-type secondary battery. FIG. 1 is an exploded perspective view showing configuration of an embodiment of the general pouch-type secondary battery, and FIG. 2 is an assembled diagram of the pouch-type secondary battery of FIG. 1. As shown in FIG. 1, the pouch-type secondary battery generally includes an electrode assembly 20 including a positive electrode tab 21 and a negative electrode tab 22 and a pouch packaging 10 in which the electrode assembly 20 is received.

Referring to FIGS. 1 and 2, the pouch packaging 10 may include an upper pouch 11 and a lower pouch 12, and the electrode assembly 20 and an electrolyte solution are received in an internal space formed by the upper pouch 11 and the lower pouch 12. Additionally, the upper pouch 11 and the lower pouch 12 have sealing parts on the outer peripheries to seal the internal space, and the sealing parts are adhered (sealed) to each other.

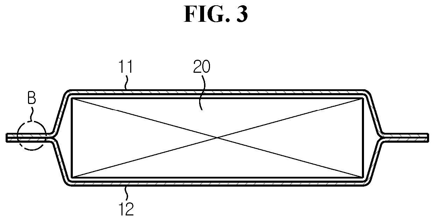

FIG. 3 is a cross-sectional view taken along the line A-A' of FIG. 2. Referring to FIG. 3, each of the upper pouch 11 and the lower pouch 12 is formed from a laminate film including an outer insulating layer, a metal layer and an inner insulating layer. Additionally, to seal the internal space between the upper pouch 11 and the lower pouch 12, the sealing part B of the upper pouch 11 and the sealing part B of the lower pouch 12 are adhered to each other by heat welding. As such, the pouch includes the metal layer, and since weight is an important factor in an automobile battery, when used in an automobile battery application, the metal layer is a factor that increases the weight, and this problem is the same for an aluminum foil that is a lightweight metal.

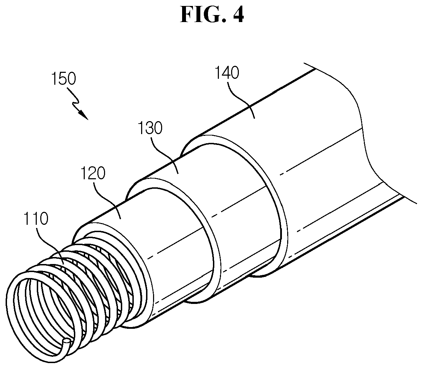

FIG. 4 is a diagram showing the structure of an embodiment of a general flexible secondary battery. As shown in FIG. 4, the flexible secondary battery 150 may be formed in the shape of a cable to allow it to bend, and may include a negative electrode 110 wound in the shape of a coil, a separator 120 formed in a cylindrical shape around the outer surface of the negative electrode 110 where the negative electrode 110 is disposed on the inner side of the separator 120, a positive electrode 130 provided on the outer surface of the separator 120, and a packaging 140 formed in a cylindrical shape where the positive electrode 130 is provided on the inner side of the packaging 140.

When a laminate sheet commonly used in pouch-type batteries is used to package the flexible secondary battery, due to poor mechanical properties of a metal layer, in particular, an aluminum foil, it is predicted that packaging rupture will occur when the flexible secondary battery is bent or folded while in use. To solve this problem, suggestions have been made to replace the aluminum foil with a polymer film having high vapor barrier property, but in the battery field where the water vapor transmission rate (WVTR) less than 10⁻³ g/m²/day is required, it is difficult to satisfy the above requirement by the polymer film.

### DISCLOSURE

### Technical Problem

The present disclosure is directed to providing a film for packaging a secondary battery with improved vapor and/or gas barrier performance by minimizing passages through which vapor and/or gas enter, for example, capillaries.

The present disclosure is further directed to providing a secondary battery comprising the packaging film.

### Technical Solution

The object is achieved by the subject-matter of independent claims 1, 9 and 14. Advantageous further developments are subject-matter of the dependent claims.

### Advantageous Effects

The film for packaging a secondary battery according to the present disclosure comprises a reduced graphene oxide layer, and the reduced graphene oxide layer blocks the passage through which vapor and/or gas enters very effectively due to electrostatic interaction between reduced graphene oxide sheets of the reduced graphene oxide layer.

Particularly, the effect of blocking the passage through which vapor and gas enters very effectively as described above cannot be expected from a reduced graphene oxide layer formed by simply stacking reduced graphene oxide sheets of the reduced graphene oxide layer without physical or chemical bonds with adjacent reduced graphene oxide sheets. The reason is that when graphene oxide or reduced graphene oxide itself is used in a packaging film, there are a few water monolayers in an interlayer between the graphene oxide sheets, and due to the presence of the water monolayers, it is impossible to prevent the ingress of vapor and gas.

Additionally, since the film for packaging a secondary battery prevents the ingress of vapor and/or gas, a secondary battery comprising the film for packaging a secondary battery according to the present disclosure may avoid the contamination of an electrolyte, improve the life characteristics of the battery, and prevent the battery performance degradation.

Additionally, when the secondary battery according to the present disclosure is a flexible secondary battery, packaging rupture does not occur when the flexible secondary battery is bent or folded while in use.

Additionally, when the secondary battery according to the present disclosure is a pouch-type secondary battery, the packaging film does not include a metal layer, resulting in reduced weight of the secondary battery. The weight reduction is very significant to vehicles of which the performance greatly depends on the vehicle weight.

### BRIEF DESCRIPTION OF DRAWINGS

FIG. 1 is an exploded perspective view showing configuration of an embodiment of a general pouch-type secondary battery.
FIG. 2 is an assembled diagram of the pouch-type secondary battery of FIG. 1.
FIG. 3 is a cross-sectional view taken along the line A-A' of FIG. 2.
FIG. 4 is a diagram showing the structure of an embodiment of a general flexible secondary battery.
FIG. 5 is a schematic internal cross-sectional view of a reduced graphene oxide layer according to an embodiment of the present disclosure.
FIG. 6 is a schematic cross-sectional view of a film for packaging a secondary battery according to an embodiment of the present disclosure.
FIG. 7 is a schematic cross-sectional view of a film for packaging a secondary battery according to an embodiment of the present disclosure.
FIG. 8 is a diagram showing an embodiment of a packaged flexible secondary battery according to an embodiment of the present disclosure.
FIG. 9 is a graph showing the cycling performance of secondary batteries manufactured in example 2 and comparative example 4.

### BEST MODE

Hereinafter, the present disclosure will be described in detail. It should be understood that the terms or words used in the specification and the appended claims should not be construed as limited to general and dictionary meanings, but interpreted based on the meanings and concepts corresponding to the technical aspects of the present disclosure on the basis of the principle that the inventor is allowed to define terms appropriately for the best explanation. Therefore, the embodiments described herein and illustration in the drawings are just a most preferred embodiment of the present disclosure, and they are not intended to fully describe the technical aspects of the present disclosure, so it should be understood that other equivalents and modifications could be made thereto within the scope of the claims.

It will be understood that when an element is referred to as being "connected to" another element, it can be "directly connected to" the other element and it may be "electrically connected" to the other element with intervening elements interposed between.

It will be understood that when an element is referred to as being disposed "on an outer side of" another element, it can be placed in contact with one surface of the other element and intervening elements may be present.

When used in this specification, "comprise" specifies the presence of stated elements, but does not preclude the presence or addition of one or more other elements, unless the context clearly indicates otherwise. It will be understood that "about" are used herein in the sense of at, or nearly at, when given the manufacturing and material tolerances inherent in the stated circumstances and are used to prevent the unscrupulous infringer from unfairly taking advantage of the disclosure where exact or absolute figures are stated as an aid to understanding the present disclosure.

When used in this specification, "A and/or B" specifies "either A or B, or both".

When used in this specification, "graphene" refers to the form of a plurality of carbon atoms joined together by covalent bonds to form a polycyclic aromatic molecule. The carbon atoms joined together by covalent bonds may form six-membered rings as repeat units, but may further include five-membered rings and/or seven-membered rings. Accordingly, a sheet of graphene may be the form of a single layer of covalently bonded carbon atoms, but is not limited thereto. The sheet of graphene may have various structures, and these structures may differ depending on the number of five-membered rings and/or seven-membered rings that may be included in graphene. Additionally, when the sheet of graphene is a single layer, sheets of graphene may be stacked to form multiple layers, and the graphene sheet may be saturated with hydrogen atoms at the edge on the side, but is not limited thereto.

When used in this specification, "graphene oxide" may be shorted as "GO". The graphene oxide may include a structure in which a functional group containing oxygen such as a carboxyl group, a hydroxyl group or an epoxy group is bonded on a single layer of graphene, but is not limited thereto.

When used in this specification, "reduced graphene oxide" refers to graphene oxide having reduced oxygen content by reduction, and may be shorted as "rGO". In a non-limiting example, the oxygen content in the reduced graphene oxide may be 0.01 to 30 at.% based on 100 at.% of carbon, but is not limited thereto.

In this specification, an interlayer spacing between reduced graphene oxide sheets may be measured using XRD and calculated using Brag equation. The used XRD may be Bruker D4 Endeavor.

In this specification, the thickness of a reduced graphene oxide layer may be determined by observing a cross section of a synthesized reduced graphene oxide layer using a scanning electron microscope (SEM), and the used SEM may be Hitachi 4800.

In this specification, the thickness of a reduced graphene oxide sheet may be measured using Atomic Force Microscope (AFM) after the reduced graphene oxide sheet is spin-cast on a SiO₂ substrate, and the used AFM may be Park Systems NX10.

According to an aspect of the present disclosure, there is provided a film for packaging a secondary battery for covering the entire outer surface of a secondary battery electrode assembly. The film for packaging a secondary battery comprises a mechanical support layer; a reduced graphene oxide layer disposed on the outer side of the mechanical support layer and including a plurality of reduced graphene oxide sheets; and a sealant layer disposed on the outer side of the reduced graphene oxide layer, wherein the plurality of reduced graphene oxide sheets in the reduced graphene oxide layer forms electrostatic interaction between adjacent reduced graphene oxide sheets.

It should be understood that 'electrostatic interaction' as used herein includes ionic bonding.

According to another aspect of the present disclosure, there is provided a method for manufacturing a film for packaging a secondary battery comprising the steps of preparing a mechanical support layer; coating, on the outer side of the mechanical support layer, a dispersion composition in which graphene oxide (GO) particles and a metal salt are dispersed and drying to form a graphene oxide layer, and reducing the formed graphene oxide layer to form a reduced graphene oxide (rGO) layer; and forming a sealant layer on the outer side of the reduced graphene oxide layer.

The reduced graphene oxide layer is a component that imparts an effect of preventing the ingress of vapor and/or gas to the film for packaging a secondary battery according to the present disclosure. The barrier effect may depend on factors such as the thickness of the graphene oxide layer and the degree of alignment of graphene oxide, and they may be determined by a process condition for producing reduced graphene oxide. The process condition may include, but is not limited to, the purity of the graphene oxide, the concentration of the graphene oxide dispersion composition, the coating time, the number of coatings, the evaporation rate of a solvent after coating and the presence or absence of a shear force.

Describing a method of forming the reduced graphene oxide layer, the reduced graphene oxide layer may be obtained by coating graphene oxide on one surface of the mechanical support layer directly or with an adhesive layer interposed between, and carrying out reduction.

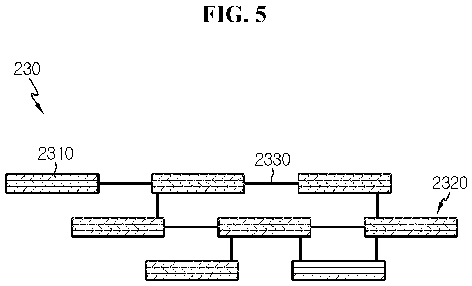

Seeing a schematic cross-sectional view of the reduced graphene oxide layer 230 according to the present disclosure with reference to FIG. 5, reduced graphene oxide particles 2310 are stacked to form a reduced graphene oxide sheet 2320, and a plurality of reduced graphene oxide sheets 2320 form a reduced graphene oxide layer, and in this instance, the reduced graphene oxide sheets 2320 form electrostatic interaction 2330 between adjacent reduced graphene oxide sheets by the medium of a metal cation.

In more detail, there are electrostatic interactions between the metal cation and oxygen functional groups at the edge of the reduced graphene oxide particles. Since the oxygen functional group has (-) charge and the metal cation has (+) charge, for a sufficient attractive force by electrostatic interaction between two or more reduced graphene oxide particles, the cation preferably has the oxidation number of 2+ or more. Additionally, an attractive force between the metal cation and the reduced graphene oxide particles is interaction occurring at the edge of the reduced graphene oxide particles, and thus a spacing between the reduced graphene oxide sheets on the basal plane is maintained.

According to a particular embodiment of the present disclosure, the reduced graphene oxide sheet may have a structure of one to three layers of reduced graphene oxide particles, for example, reduced graphene oxide platy particles. The number of the reduced graphene oxide layers is set before the reduction reaction of graphene oxide. In general, graphene oxide is synthesized by oxidation of graphite and then ultrasonic dispersion, and the number of layers of graphene oxide particles may be adjusted by adjusting the oxidation level of graphite at the graphite oxidation step. When the number of layers of reduced graphene oxide particles is equal to the above-described range, it is possible to significantly reduce the probability that defects may occur during coating of the reduced graphene oxide layer, and improve the mechanical properties of the formed reduced graphene oxide layer.

According to a particular embodiment of the present disclosure, the reduced graphene oxide sheet may have the thickness ranging from 0.002 to 10 *µ*m, or from 0.005 to 1 *µ*m, or from 0.01 to 0.1 *µ*m. When the reduced graphene oxide sheet has the above-described range of thickness, it is possible to achieve flexible mechanical properties and effective vapor barrier.

In the present disclosure, to obtain a very small interlayer spacing, it is desirable to use the graphene oxide having a predetermined level of purity or above. For example, the graphene oxide of purity 93% or higher, or 97.5% or higher, or 99.5% or higher may be used. In relation to this, in the specification, 'purity' refers to a ratio of the weight of graphene oxide to the total weight of graphene oxide and metal residue.

For coating of the graphene oxide, the metal salt and the graphene oxide may be dispersed in a dispersion medium, for example, water or deionized water to obtain a dispersion composition.

According to a particular embodiment of the present disclosure, a metal cation of the metal salt may be at least one of Li⁺, K⁺, Ag⁺, Mg²⁺, Ca²⁺, Cu²⁺, Pb²⁺, Co²⁺, Al³⁺, Cr³⁺ and Fe³⁺. Among the exemplary metal cations, the metal cation Al³⁺, Cr³⁺ or Fe³⁺ is especially desirable since it can effectively exert an electrostatic attractive force due to high oxidation number. An anion that makes up the metal salt with the metal cation may include, without limitation, any type that serves the purpose of the present disclosure, and non-limiting examples may include Cl⁻, NO₃⁻or SO₄²⁻.

According to a particular embodiment of the present disclosure, the metal salt may be added to the dispersion medium in an amount of 0.01 to 10 weight% or 0.01 to 1 weight% based on the weight of the graphene oxide particles. When the metal salt is present in the above-described range of amounts, it is possible to prevent metal particles from being formed and a nanometer-scale gap from being created between the reduced graphene sheets due to excess metal cations, and to provide a proper electrostatic phenomenon.

According to a particular embodiment of the present disclosure, the dispersion composition may include graphene oxide in an amount of about 0.0001 parts by weight to about 0.01 parts by weight based on 100 parts by weight of the dispersion medium. Within the above-described range, when the graphene oxide is present in an amount of 0.0001 parts by weight or more, it is possible to induce the alignment of graphene oxide when forming the graphene oxide layer, and when the graphene oxide is present in an amount of 0.01 parts by weight or less, it is possible to achieve good dispersion. For example, the graphene oxide dispersion composition may include graphene oxide in an amount of about 0.0001 parts by weight to about 0.01 parts by weight, about 0.0004 parts by weight to about 0.01 parts by weight, about 0.0006 parts by weight to about 0.01 parts by weight, about 0.0001 parts by weight to about 0.008 parts by weight, about 0.0004 parts by weight to about 0.008 parts by weight, about 0.0008 parts by weight to about 0.008 parts by weight, about 0.0001 parts by weight to about 0.006 parts by weight, about 0.0004 parts by weight to about 0.006 parts by weight, or about 0.0008 parts by weight to about 0.006 parts by weight based on 100 parts by weight of the dispersion medium, but is not limited thereto.

The dispersion may use an ultrasonic generator such as an ultrasonic dispersion device, but is not limited thereto.

According to a particular embodiment of the present disclosure, the graphene oxide dispersion composition may further include an organic solvent to allow the dispersion of the graphene oxide. Non-limiting examples of the organic solvent may include, but are not limited to, alcohol, dimethyl formamide (DMF), dimethyl sulfoxide (DMSO), N-methyl pyrrolidone, methyl phenol, cresol, or a combination thereof. The graphene oxide dispersion composition may further include about 100 volume% or less of the organic solvent to allow the dispersion of the graphene oxide based on 100 volume% of the dispersion medium. For example, the graphene oxide dispersion composition may further include the organic solvent to allow the dispersion of the graphene oxide, in an amount of about 1 volume% to about 100 volume%, about 20 volume% to about 100 volume%, about 1 volume% to about 80 volume%, about 20 volume% to about 80 volume%, about 1 volume% to about 60 volume%, about 20 volume% to about 60 volume%, about 40 volume% to about 60 volume%, about 1 volume% to about 40 volume%, about 20 volume% to about 40 volume%, or about 1 volume% to about 20 volume% based on 100 volume% of the dispersion medium, but is not limited thereto.

Subsequently, the graphene oxide dispersion composition may be coated on the mechanical support layer.

Non-limiting examples of the coating method may include bar coating (rod coating), spin-casting, drop-casting, vacuum filtering, dip-coating or electrophoretic coating.

To obtain a dense coating by the induced alignment of the graphene oxide from the coating time of 1 sec or longer and expect an effect for obtaining a uniform coating from the coating time within 30 min, the coating may be performed for 1 sec to 30 min, or 3 sec to 10 min, or 5 sec to 5 min.

Additionally, to densely form an adequate graphene oxide layer by coating once or more times and expect an effect for avoiding the formation of an unnecessarily thick layer by coating 30 times or less, the coating may be performed 1 to 30 times, or 1 to 10 times, or 1 to 5 times. In this case, an amount of the graphene oxide dispersion composition used in each coating may be 1 mL to 1000 mL, or 3 mL to 200 mL, or 10 mL to 100 mL.

According to a particular embodiment of the present disclosure, when the dried graphene oxide layer has the thickness of 20 nm or more, it is possible to ensure the vapor barrier performance, and when the dried graphene oxide layer has the thickness of 30 *µ*m or less, it is possible to ensure the mechanical properties. For these effects, the dried graphene oxide layer may have the thickness ranging from 20 nm to 30 *µ*m, or from 100 nm to 10 *µ*m, or from 500 nm to 5 *µ*m.

The obtained graphene oxide layer undergoes reduction to maximize the vapor barrier property of the film for packaging a secondary battery, to form a reduced graphene oxide layer.

For reduction of the graphene oxide layer, a reduction method using hydriodic acid (HI) or a reduction method using vitamin C may be used.

In the case of the reduction method using hydriodic acid, the reduced graphene oxide layer may be obtained by the steps of putting together a container containing a hydriodic acid solution and the formed graphene oxide layer into a space that is sealed, for example, a glass petri dish, performing thermal treatment at the temperature between 10°C and 100°C for 1 min to 1 hour to evaporate the hydriodic acid, and maintaining the evaporated hydriodic acid and the graphene oxide layer for 2 min to 3 hours to convert the graphene oxide to reduced graphene oxide. Alternatively, the reduced graphene oxide layer may be obtained by the steps of immersing the formed graphene oxide layer in a hydriodic acid solution of 10 to 100°C, for example, 90°C, for example, for 12 hours or longer to convert the graphene oxide layer to a reduced graphene oxide layer, and washing the reduced graphene oxide layer with distilled water and drying. The obtained reduced graphene oxide layer may be washed with ethanol. The drying may be performed at room temperature, for example, from 23 to 25 °C, and in a non-limiting example, 25 °C.

In the case of the reduction method using vitamin C, the reduced graphene oxide layer may be formed by the steps of dissolving, for example, ascorbic acid in distilled water to prepare an ascorbic acid solution at the concentration of 0.01 mg/mL to 5 mg/mL, or 0.05 mg/mL to 0.3 mg/mL; and adjusting the ascorbic acid solution to the temperature ranging from 25 to 90°C, and immersing the graphene oxide layer in the ascorbic acid solution to reduce the graphene oxide layer.

The obtained reduced graphene oxide layer may have a structure that can block the ingress of vapor and/or gas, and may have an interlayer spacing between the reduced graphene oxide sheets, for example, ranging from 0.3 nm to 5.0 nm, or from 0.3 nm to 0.7 nm.

The "interlayer spacing" as used herein refers to a spacing between the reduced graphene oxide sheets of the reduced graphene oxide sheet, i.e., a distance between the reduced graphene oxide sheets.

As opposed to the present disclosure, in case that there is no electrostatic interaction between the reduced graphene oxide sheets of the reduced graphene oxide layer, there is no chemical and/or physical connector between the reduced graphene oxide sheets, and a defect in vapor barrier may be developed. As a consequence, water particles pass through the reduced graphene oxide sheets, causing degraded performance of the battery packaged with the film for packaging a secondary battery including the reduced graphene oxide layer.

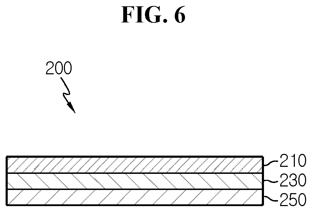

Describing the film for packaging a secondary battery of the present disclosure with reference to FIG. 6, the film 200 for packaging a secondary battery according to an embodiment of the present disclosure includes a mechanical support layer 210; a reduced graphene oxide layer 230 disposed on the outer side of the mechanical support layer 210 and including a plurality of reduced graphene oxide sheets; and a sealant layer 250 disposed on the outer side of the reduced graphene oxide layer 230, wherein the reduced graphene oxide sheets of the reduced graphene oxide layer form electrostatic interaction between adjacent reduced graphene oxide sheets.

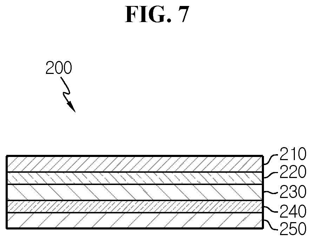

Additionally, as shown in FIG. 7, the film 200 for packaging a secondary battery of the present disclosure may include a mechanical support layer 210; a reduced graphene oxide layer 230 disposed on the outer side of the mechanical support layer 210; and a sealant layer 250 disposed on the outer side of the reduced graphene oxide layer 230, and may further include a first adhesive layer 220 between the mechanical support layer 210 and the reduced graphene oxide layer 230, and a second adhesive layer 240 between the reduced graphene oxide layer 230 and the sealant layer 250.

The mechanical support layer serves to prevent the film for packaging a secondary battery from being torn or damaged by external stresses or impacts, and may include, without limitation, any type having sufficient mechanical properties for preventing the film for packaging a secondary battery from being torn or damaged by external stresses or impacts.

According to a particular embodiment of the present disclosure, non-limiting examples of the material of which the mechanical support layer is made, may include, but are not limited to, polyolefin such as high density polyethylene, low density polyethylene, linear low density polyethylene, ultra high molecular weight polyethylene and polypropylene; polyester such as polyethyleneterephthalate and polybutyleneterephthalate; polyacetal; polyamide; polycarbonate; polyimide; polyetheretherketone; polyethersulfone; polyphenyleneoxide; polyphenylenesulfide; polyethylenenaphthalate; or a combination thereof.

The mechanical support layer may be optionally modified by oxygen or nitrogen plasma treatment. When the mechanical support layer has a hydrophobic surface, surface energy is generated due to a difference between hydrophobicity of the mechanical support layer surface and hydrophilicity of the graphene oxide, and as a result, it may be difficult to achieve a uniform coating of the graphene oxide layer on one surface of the mechanical support layer. To control this, surface modification may be performed to modify the surface of the mechanical support layer having the hydrophobic surface to be hydrophilic. The surface modification may be performed by UV-ozone treatment, plasma surface treatment using oxygen or nitrogen, chemical treatment using a silane coupling agent such as amino silane, or surface coating using polymer or an organic compound, but is not limited thereto.

The reduced graphene oxide layer may be formed on one surface of the mechanical support layer directly or with an adhesive layer interposed between.

The sealant layer may be formed on the outer side of the reduced graphene oxide layer directly or with an adhesive layer interposed between. When the sealant layer is formed around the outer surface of the electrode assembly and in contact with the electrode assembly, the sealant layer may isolate the electrode assembly from the outside.

The sealant layer has a thermally adhesive property or a hot melt property that makes it adhere to by heat, and may include, but is not limited to, polypropylene-acrylic acid copolymer, polyethylene-acrylic acid copolymer, polypropylene chloride, polypropylene-butylene-ethylene terpolymer, polypropylene, polyethylene, ethylene propylene copolymer or a combination thereof.

According to another aspect of the present disclosure, the film for packaging a secondary battery may further include an adhesive layer in at least one of between the reduced graphene oxide layer and the sealant layer, and between the mechanical support layer and the reduced graphene oxide layer.

When the adhesive strength between the mechanical support layer and the reduced graphene oxide layer and between the reduced graphene oxide layer and the sealant layer is insufficient, the film for packaging a secondary battery may further include the adhesive layer between the opposing layers among the mechanical support layer, the reduced graphene oxide layer and the sealant layer. Through this, the adhesive property and the vapor barrier property may be further improved. The material of the adhesive layer may include, but is not limited to, for example, a urethane-based material, an acrylic material and a composition containing thermoplastic elastomer.

According to a particular embodiment of the present disclosure, the film for packaging a secondary battery having the above-described structure may have the thickness ranging from 1 *µ*m to 1,000 *µ*m, or from 10 *µ*m to 500 *µ*m, or from 20 *µ*m to 200 *µ*m. In this case, the film for packaging a secondary battery may have the water vapor transmission rate (WVTR) ranging from 10⁻⁶ g/m²/day to 10⁻³ g/m²/day, or from 10⁻⁶ g/m²/day to 10⁻⁴ g/m²/day, or from 10⁻⁶ g/m²/day to 10⁻⁵ g/m²/day. Accordingly, the vapor barrier property requirement required to package a secondary battery may be satisfied.

In the specification, as the "WVTR" or "water vapor transmission rate" is lower, the barrier performance against vapor or moisture is better, and the "WVTR" is measured at 37.8°C, 100% humidity in accordance with ASTM F-1249.

When a pouch-type case is manufactured using the film for packaging a secondary battery, for example, two films for packaging a secondary battery may be prepared. Each of the film for packaging a secondary battery may be disposed on the upper and lower surfaces of the electrode assembly, with each of the sealant layers facing the upper and lower surfaces of the electrode assembly, and the outer peripheries of the films for packaging a secondary battery disposed on the upper and lower surfaces may be placed in contact with each other and joined to each other. Alternatively, one film for packaging a secondary battery may be folded in half so that two halves overlap, with the sealant layers facing each other, the electrode assembly may be placed within the folded film for packaging a secondary battery, and the outer peripheries of the film for packaging a secondary battery may be in contact with each other and joined to each other.

When a packaging of a flexible battery is formed using the film for packaging a secondary battery, the film for packaging a secondary battery may wrap the entire outer surface of the electrode assembly such that the mechanical support layer of the film for packaging a secondary battery faces the outside and the sealant layer faces the electrode assembly. One end of the sealant layer may come into contact with part of the other end of the film for packaging a secondary battery. For example, one end of the sealant layer may come into contact with the other end of the mechanical support layer of the film for packaging a secondary battery, or one end of the sealant layer may come into contact with the other end of the sealant layer of the film for packaging a secondary battery. When heat is applied, the sealant layer whose parts overlap may melt and seal to form a tubular, i.e., 'O' shaped tube. Through the sealing of the sealant layer, the film for packaging a secondary battery may be completely wrapped around the outer surface of the electrode assembly, and accordingly, vapor ingress into the battery may be effectively prevented.

**In** the present disclosure, when the film for packaging a secondary battery is wrapped around the outer surface of the electrode assembly, the length of the film for packaging a secondary battery may be greater than the periphery of the electrode assembly, so parts of the sealant layer of the film for packaging a secondary battery may overlap. For example, the length of the film for packaging a secondary battery may be 1 to 99% or 1 to 70% of the outer periphery of the electrode assembly, or the length of the film for packaging a secondary battery may be greater than the outer periphery of the electrode assembly by 3 to 50%, or 5 to 30%.

The film for packaging a secondary battery may be used on its own, or may further include an outer layer of various types of polymers, for example, a polymer resin layer.

When the film for packaging a secondary battery according to the present disclosure is preferably used to package a flexible battery, the packaging of the flexible battery may include the film for packaging a secondary battery and a heat shrinkable tube that wraps the entire outer surface of the film for packaging a secondary battery. The heat shrinkable tube is a tube that shrinks when heated, and refers to a material that air-tightly wraps a terminal or other material of a different shape or size. **In** the present disclosure, the film for packaging a secondary battery may be wrapped around the outer surface of the electrode assembly such that parts of the film for packaging a secondary battery overlap, and inserted into the heat shrinkable tube. When heat is applied later, the sealing polymer of the film for packaging a secondary battery is melted by the heat transferred through the heat shrinkable tube, initiating the sealing of the film for packaging a secondary battery. At the same time, when heated, the heat shrinkable tube shrinks, thereby providing an air-tight packaging between the film for packaging a secondary battery wrapped around the outer surface of the electrode assembly and the heat shrinkable tube. Through the air-tight packaging, the vapor barrier performance of the packaging may be improved so much, and at the same time, the insulation effect may be obtained through the heat shrinkable tube. Additionally, when only the heat shrinkable tube is used, vapor may enter the battery through the pores due to the structure of the heat shrinkable tube, but when both the film for packaging a secondary battery and the heat shrinkable tube are included, in addition to the vapor barrier effect, the flexible battery protection effect may be improved.

There are commercially available heat shrinkable tubes of various materials and shapes, and any suitable heat shrinkable tube may be easily bought and used for the purpose of the present disclosure. Preferably, the temperature for heat shrink processing is low to prevent thermal damage to the secondary battery, and generally, it is required to complete heat shrinking at the temperature of 70 to 200°C, or 70 to 150°C, 100 to 150°C, or 70 to 120°C. The heat shrinkable tube layer may include at least one selected from the group consisting of polyolefin such as polyethylene and polypropylene, polyesters such as polyethyleneterephthalate, fluororesin such as polyvinylidene fluoride and polytetrafluoroethylene, and polyvinyl chloride.

According to the present disclosure, there is provided a flexible secondary battery packaged using the film for packaging a secondary battery.

The packaged flexible secondary battery according to the present disclosure comprises an electrode assembly that has a horizontal cross section of a predetermined shape and extends in the lengthwise direction, wherein the electrode assembly comprises an inner electrode, a separation layer formed around the inner electrode to prevent a short circuit of the electrode, and an outer electrode formed around the outer surface of the separation layer; and the film for packaging a flexible secondary battery according to the present disclosure that is tightly wrapped around the entire outer surface of the electrode assembly.

In the present disclosure, the predetermined shape is not limited to a particular shape, and may include any shape without departing from the nature of the present disclosure.

Here, the predetermined shape is not limited to a particular shape, and may include any shape without departing from the nature of the present disclosure. The horizontal cross section of the predetermined shape may be circular or polygonal, and the circular structure may be a circular structure of geometrically perfect symmetry and an oval structure of asymmetry. The polygonal structure is not limited to a particular shape, and non-limiting examples of the polygonal structure may include a triangular shape, a quadrilateral shape, a pentagonal shape or a hexagonal shape.

The flexible secondary battery of the present disclosure has the horizontal cross section of the predetermined shape and a linear structure that elongates in the lengthwise direction of the horizontal cross section, and it is so flexible that it can change the shape freely.

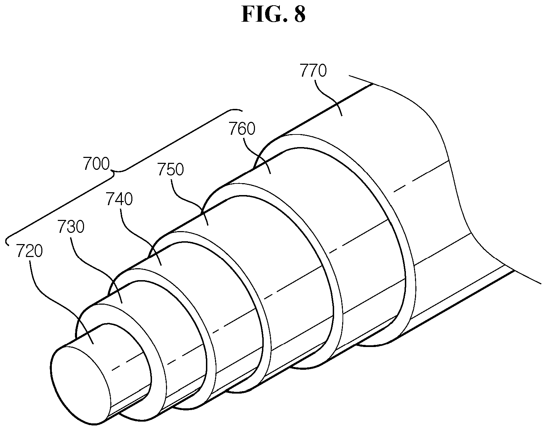

Referring to FIG. 8, the flexible secondary battery comprises an electrode assembly 700 comprising an inner electrode including an inner electrode current collector 720 and an inner electrode active material layer 730 formed on the surface of the inner electrode current collector 720; a separation layer 740 formed around the outer surface of the inner electrode to prevent a short circuit of the electrode, and an outer electrode including an outer electrode active material layer 750 formed around the outer surface of the separation layer and an outer electrode current collector 760 formed around the outer surface of the outer electrode active material layer; and a packaging 770 tightly wrapped around the entire outer surface of the electrode assembly 700, wherein the packaging 770 is formed from the above-described film for packaging a secondary battery according to the present disclosure.

In an embodiment of the present disclosure, the inner electrode of the electrode assembly may include a lithium ion supplying core including an electrolyte, an inner current collector of an open structure formed around the outer surface of the lithium ion supplying core and an inner electrode active material layer formed on the surface of the inner current collector.

The open structure refers to a structure having an open boundary surface through which a substance may be transferred freely from the inside of the structure to the outside thereof.

The lithium ion supplying core may include an electrolyte, and the electrolyte is not limited to a particular type, and may include a non-aqueous electrolyte using ethylene carbonate (EC), propylene carbonate (PC), butylene carbonate (BC), vinylene carbonate (VC), diethyl carbonate (DEC), dimethyl carbonate (DMC), ethylmethylcarbonate (EMC), methyl formate (MF), γ-butyrolactone (γ-BL), sulfolane, methylacetate (MA) or methylpropionate (MP); a gel polymer electrolyte using PEO, PVdF, PMMA, PAN or PVAC; or a solid electrolyte using PEO, polypropylene oxide (PPO), polyethylene imine (PEI), polyethylene sulphide (PES) or polyvinyl acetate (PVAc). Additionally, the electrolyte may further include a lithium salt, and preferably, the lithium salt may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloro borane lithium, lower aliphatic carboxylic acid lithium and lithium tetraphenyl borate. Additionally, the lithium ion supplying core may include the electrolyte alone, and in the case of a liquid electrolyte, the lithium ion supplying core may include a porous carrier.

The inner current collector 720 of the present disclosure may have an open structure that allows the penetration of the electrolyte of the lithium ion supplying core, and the open structure may include any type of structure that allows the penetration of the electrolyte.

Preferably, the inner current collector 720 may be manufactured using stainless steel, aluminum, nickel, titanium, sintered carbon, copper, or stainless steel treated with carbon, nickel, titanium or silver on the surface, aluminum-cadmium alloy, non-conductive polymer surface-treated with a conductive material, or conductive polymer.

The current collector serves to collect electrons produced by electrochemical reaction of the active material or supply electrons necessary for electrochemical reaction, and generally, metal such as copper or aluminum is used. Particularly, when a polymer conductor made of non-conductive polymer surface-treated with a conductive material or conductive polymer is used, flexibility is relatively higher than when metal such as copper or aluminum is used. Additionally, it is possible to achieve weight reduction of the battery by replacing the metal current collector with a polymer current collector.

The conductive material may include polyacetylene, polyaniline, polypyrrole, polythiophene and poly sulfur nitride, indium thin oxide (ITO), silver, palladium and nickel. The conductive polymer may include polyacetylene, polyaniline, polypyrrole, polythiophene and poly sulfur nitride. The non-conductive polymer used in the current collector is not limited to a particular type.

The inner electrode active material layer 730 may be formed on the surface of the inner current collector 720. **In** this instance, the inner electrode active material layer 730 may be formed around the outer surface of the inner current collector 720 such that the open structure of the inner current collector 720 is not exposed to the outer surface of the inner electrode active material layer 730, and the inner electrode active material layer 730 may be formed on the surface of the open structure of the inner current collector 720 such that the open structure of the inner current collector 720 is exposed to the outer surface of the inner electrode active material layer 730. For example, an active material layer may be formed on the surface of a wound wire-type current collector, and a wire-type current collector having an electrode active material layer may be wound.

The outer current collector is not limited to a particular type, but may include a pipe-type current collector, a wound wire-type current collector or a mesh-type current collector. Additionally, the outer current collector may be made of stainless steel, aluminum, nickel, titanium, sintered carbon, copper; stainless steel treated with carbon, nickel, titanium or silver on the surface; aluminum-cadmium alloy; non-conductive polymer surface-treated with a conductive material; conductive polymer; a metal paste including metal particles of Ni, Al, Au, Ag, Al, Pd/Ag, Cr, Ta, Cu, Ba or ITO; or a carbon paste including carbon particles of graphite, carbon black or carbon nanotubes.

The inner electrode may be a negative or positive electrode, and the outer electrode may be a positive or negative electrode opposite to the inner electrode.

The electrode active material layer such as the inner electrode active material layer and the outer electrode active material layer allows ions to move through the current collector, and the movement of ions is made by interaction through intercalation and deintercalation of ions to/from an electrolyte layer. The electrode active material layer may include natural graphite, artificial graphite, a carbonaceous material; lithium containing titanium composite oxide (LTO), metals (Me) including Si, Sn, Li, Zn, Mg, Cd, Ce, Ni or Fe; alloys of the metals (Me); oxide (MeOₓ) of the metals (Me); and composite of the metals (Me) and carbon. The positive electrode active material layer may include LiCoO₂, LiNiO₂, LiMn₂O₄, LiCoPO₄, LiFePO₄, LiNiMnCoO₂ and LiNi_{1-x-y-z}CoₓM1_{y}M2_{z}O₂(M1 and M2 are, independently, any one selected from the group consisting of Al, Ni, Co, Fe, Mn, V, Cr, Ti, W, Ta, Mg and Mo, and x, y and z are independently atomic fractions of elements that form the oxide, where 0 ≤ x < 0.5, 0 ≤ y < 0.5, 0 ≤ z < 0.5, x+y+z ≤ 1).

According to a particular embodiment of the present disclosure, the inner electrode and the outer electrode may be positive and negative electrodes, and may be negative and positive electrodes, and accordingly, the inner electrode active material layer and the outer electrode active material layer may be positive and negative electrode active material layers, or negative and positive electrode active material layers.

The separation layer of the present disclosure may use an electrolyte layer or a separator.

The electrolyte layer serving as an ion channel may use a gel polymer electrolyte using PEO, PVdF, PMMA, PAN or PVAC, or a solid electrolyte using PEO, polypropylene oxide (PPO), polyethylene imine (PEI), polyethylene sulphide (PES) or polyvinyl acetate (PVAc). Preferably, the solid electrolyte matrix may have a framework of polymer or ceramic glass. In the case of a general polymer electrolyte, even though ionic conductivity is satisfied, ions may move very slowly due to the reaction rate, and thus it is preferable to use the gel polymer electrolyte having easier movement of ions than a solid. The gel polymer electrolyte has poor mechanical properties, and to improve the mechanical properties, the gel polymer electrolyte may include a pore structure support or crosslinked polymer. The electrolyte layer of the present disclosure may act as a separator, thereby eliminating the need to use a separate separator.

The electrolyte layer of the present disclosure may further include a lithium salt. The lithium salt may improve the ionic conductivity and reaction rate, and non-limiting examples may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloro borane lithium, lower aliphatic carboxylic acid lithium and lithium tetraphenyl borate.

The separator is not limited to a particular type, and may include a porous substrate made of polyolefin-based polymer selected from the group consisting of ethylene homopolymer, propylene homopolymer, ethylene-butene copolymer, ethylene-hexene copolymer and ethylene-methacrylate copolymer; a porous substrate made of polymer selected from the group consisting of polyester, polyacetal, polyamide, polycarbonate, polyimide, polyetheretherketone, polyethersulfone, polyphenyleneoxide, polyphenylenesulfide and polyethylenenaphthalene; or a porous substrate made of a mixture of inorganic particles and binder polymer. Additionally, the separator may further include a porous coating layer including a mixture of inorganic particles and binder polymer on at least one surface of the porous substrate made of the above-described polymer. Particularly, to easily transport the lithium ions of the lithium ion supplying core to the outer electrode, it is desirable to use the separator of a non-woven fabric corresponding to the porous substrate made of polymer selected from the group consisting of polyester, polyacetal, polyamide, polycarbonate, polyimide, polyetheretherketone, polyethersulfone, polyphenyleneoxide, polyphenylenesulfide and polyethylenenaphthalene.

Additionally, a method for manufacturing a packaged flexible secondary battery according to an aspect of the present disclosure comprises:
(S1) preparing an electrode assembly that has a horizontal cross section of a predetermined shape and extends in the lengthwise direction, wherein the electrode assembly comprises an inner electrode, a separation layer formed around the inner electrode to prevent a short circuit of the electrode, and an outer electrode formed around the outer surface of the separation layer;
(S2) preparing the above-described film for packaging a secondary battery according to the present disclosure, wherein the length of the film is greater than the outer periphery of the electrode assembly;
(S3) wrapping the film for packaging a secondary battery around the entire outer surface of the electrode assembly such that one end of the sealant layer of the film for packaging a secondary battery overlaps with the other end of the film; and
(S4) sealing the overlapping parts of the sealant layer of the film for packaging a secondary battery by heating the electrode assembly surrounded by the film for packaging a secondary battery.

According to a particular embodiment of the present disclosure, in the step (S4), a heat shrinkable tube may be applied through the steps of inserting the electrode assembly surrounded by the film for packaging a secondary battery into the heat shrinkable tube, sealing the overlapping parts of the sealant layer of the film for packaging a secondary battery by heating, and joining the heat shrinkable tube and the electrode assembly surrounded by the film for packaging a secondary battery by shrinking of the heat shrinkable tube.

The flexible secondary battery according to an embodiment of the present disclosure applies a skin-tight packaging to the electrode assembly, and there is no wrinkle as shown in FIG. 8. As a result, the flexibility of the battery may be improved. Additionally, when the packaging further includes the heat shrinkable tube, the flexibility of the battery may be further improved.

According to an embodiment of the present disclosure, there is provided a pouch-type secondary battery packaged using the film for packaging a secondary battery.

An electrode assembly included in the pouch-type secondary battery may be an electrode assembly for a lithium secondary battery. Accordingly, the pouch-type secondary battery of the present disclosure may be a pouch-type lithium secondary battery.

The lithium secondary battery may include a positive electrode, a negative electrode and a separator interposed between the positive electrode and the negative electrode, and the lithium secondary battery may be a stack- or stack and folding-type lithium secondary battery.

The stack-type lithium secondary battery may be a lithium secondary battery including an electrode assembly manufactured by vertically stacking a negative electrode, a separator and a positive electrode. The stack and folding-type lithium secondary battery may be a lithium secondary battery including an electrode assembly manufactured by winding or folding a full cell of positive electrode/separator/negative electrode structure or a bicell of positive electrode (negative electrode)/separator/ negative electrode (positive electrode)/separator/positive electrode (negative electrode) structure in predetermined unit size using a long continuous separation film.

The positive electrode may be manufactured by a common method well known in the art. For example, the positive electrode may be manufactured by mixing a positive electrode active material with a solvent, and if necessary, a binder, a conductive material and a dispersant and stirring to prepare a slurry, and applying (coating) the slurry on a metal current collector, followed by roll pressing and drying.

The metal current collector may be made of a highly conductive metal that is easy for the slurry of the positive electrode active material to adhere. The metal current collector may include, without limitation, any metal having high conductivity while not causing a chemical reaction to the corresponding battery within the voltage range of the battery, for example, stainless steel, aluminum, nickel, titanium, sintered carbon, or aluminum or stainless steel treated with carbon, nickel, titanium or silver on the surface. Additionally, the current collector may have the fine-textured surface to increase the adhesion of the positive electrode active material. The current collector may come in various types including a film, a sheet, a foil, a net, a porous material, a foam and a nonwoven, and may be 3 to 500 *µ*m in thickness.

In the method for manufacturing a lithium secondary battery of the present disclosure, each of the positive electrode active material and the negative electrode active material may include, independently, the same positive electrode active material and negative electrode active material as those described above in relation to the flexible secondary battery, and for details about type, a reference is made to the foregoing description.

The solvent for forming the positive electrode may include an organic solvent such as N-methyl pyrrolidone (NMP), dimethylformamide (DMF), acetone and dimethyl acetamide, or water, and these solvents may be used alone or in combination. The solvent may be present in a sufficient amount to dissolve and disperse the positive electrode active material, the binder and the conductive material in consideration of the coating thickness of the slurry and the production yield.

The binder may include various types of binder polymers, for example, poly(vinylidene fluoride-co-hexafluoropropylene) (PVDF-co-HFP), polyvinylidenefluoride, polyacrylonitrile, polymethylmethacrylate, polyvinylalcohol, carboxymethylcellulose (CMC), starch, hydroxypropyl cellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, polyacrylic acid, and polymer, or various copolymers with substitution of Li, Na or Ca for hydrogen of all of them.

The conductive material may include, without limitation, any type having conductivity while not causing a chemical change to the corresponding battery, and for example, may include graphite such as natural graphite or artificial graphite; carbon black such as acetylene black, ketjen black, channel black, furnace black, lamp black, thermal black; a conductive fiber such as a carbon fiber or a metal fiber; conductive tubes such as carbon nanotubes; metal particles such as fluorocarbon, aluminum, nickel particles; conductive whiskers such as zinc oxide, potassium titanate; conductive metal oxide such as titanium oxide; and a conductive material such as a polyphenylene derivative. The conductive material may be present in an amount of 1 weight% to 20 weight% based on the total weight of the positive electrode slurry.

The dispersion medium may include an aqueous dispersant or an organic dispersion medium, for example, N-methyl-2-pyrrolidone.

The negative electrode may be manufactured by the common method well known in the art, and for example, the negative electrode may be manufactured by mixing the negative electrode active material with additives such as a binder and a conductive material and stirring to prepare a negative electrode active material slurry, and coating the slurry on a negative electrode current collector and drying, followed by roll pressing.

The binder may be used to bind the negative electrode active material particles together to keep aggregates. The binder may include, without limitation, any type of binder commonly used in preparing the slurry for the negative electrode active material, for example, a non-aqueous binder of polyvinylalcohol, carboxymethylcellulose, hydroxypropylenecellulose, diacetylenecellulose, polyvinylchloride, polyvinylpyrrolidone, polytetrafluoroethylene (PTFE), polyvinylidene fluoride (PVdF), polyethylene or polypropylene, and an aqueous binder of at least one selected from the group consisting of acrylonitrile-butadiene rubber, styrene-butadiene rubber and acrylic rubber. The aqueous binder has higher economical efficiency and is more eco-friendly and less harmful to health than the non-aqueous binder. Additionally, compared to the non-aqueous binder, the aqueous binder has a high binding effect, leading to a larger amount of active materials in the same volume condition, thereby achieving high capacity. Preferably, the aqueous binder may include styrene-butadiene rubber.

The binder may be present in an amount of 10 weight% or less, specifically, 0.1 weight% to 10 weight% based on the total weight of the slurry for the negative electrode active material. When the binder content is less than 0.1 weight%, an effect of use of the binder is insignificant, and when the binder content is higher than 10 weight%, an amount of the active material relatively reduces due to the increased binder content and there is a likelihood that the capacity per volume may reduce.

The conductive material may include, without limitation, any type having conductivity while not causing a chemical change to the corresponding battery, and examples of the conductive material may include graphite such as natural graphite or artificial graphite; carbon black such as acetylene black, ketjen black, channel black, furnace black, lamp black, thermal black; a conductive fiber such as a carbon fiber or a metal fiber; metal particles such as fluorocarbon, aluminum, nickel particles; conductive whiskers such as zinc oxide and potassium titanate; conductive metal oxide such as titanium oxide; or a conductive material such as a polyphenylene derivative. The conductive material may be present in an amount of 1 weight% to 9 **weight%** based on the total weight of the slurry for the negative electrode active material.

The negative electrode current collector used in the negative electrode according to an embodiment of the present disclosure may be 3 *µ*m to 500 *µ*m in thickness. The negative electrode current collector may include, without limitation, any type having conductivity while not causing a chemical change to the corresponding battery, for example, copper, gold, stainless steel, aluminum, nickel, titanium, sintered carbon, copper or stainless steel treated with carbon, nickel, titanium or silver on the surface, aluminum-cadmium alloy. Additionally, the surface may be fine-textured to increase the adhesion of the negative electrode active material, and may come in various types including a film, a sheet, a foil, a net, a porous material, a foam and a nonwoven.

For the separator, a reference is made to the foregoing description.

For an electrolyte for the lithium secondary battery, any type of lithium salt commonly used may be used without limitation, and for example, an anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte used in the present disclosure may include, but is not limited to, an organic liquid electrolyte, an inorganic liquid electrolyte, a solid polymer electrolyte, a gel polymer electrolyte, a solid inorganic electrolyte and a meltable inorganic electrolyte that can be used to manufacture the lithium secondary battery.

### MODE FOR DISCLOSURE

Hereinafter, examples will be described in detail to particularly describe the present disclosure. However, the examples of the present disclosure may be modified in other different forms, and the scope of the present disclosure should not be construed as being limited to the following examples. The examples of the present disclosure are provided to fully explain the present disclosure to those having ordinary knowledge in the art to which the present disclosure pertains.

### Example 1

### Formation of reduced graphene oxide layer on mechanical support layer

A polyethylene terephthalate (PET) film (LAMI-ACE, a laminating film) was prepared as a mechanical support layer.

To form a reduced graphene oxide layer, graphene oxide particles (graphene oxide powder, Standard Graphene) were put into deionized water, and energy was applied using an ultrasonic dispersion device to prepare a graphene oxide dispersion composition at the concentration of 1 mg/mL. Subsequently, CuCl₂ (Sigma Aldrich, CuCl₂) was added to the dispersion composition in an amount of 1 weight% based on the weight of graphene oxide. The dispersion composition was poured onto the polyethylene terephthalate (PET) film, followed by coating by bar coating and drying to form a graphene oxide layer. The formed graphene oxide layer was immersed in a hydriodic acid solution (TCI, 57% Hydriodic acid) of 90 °C and maintained for 12 hours or longer. Subsequently, the graphene oxide layer was taken out of the hydriodic acid solution, washed with distilled water and dried at room temperature to obtain a reduced graphene oxide layer. It was found that the obtained reduced graphene oxide layer was about 100 nm in thickness, a graphene oxide sheet of the reduced graphene oxide layer was 1 to 4 nm in thickness, and an interlayer spacing between graphene oxide sheets was about 0.3 to 0.4 nm.

The interlayer spacing between the reduced graphene oxide sheets was measured using XRD and calculated using Brag equation. The used XRD was Bruker D4 Endeavor.

The thickness of the reduced graphene oxide layer was determined by observing the cross section of the synthesized reduced graphene oxide layer using SEM, and the used SEM was Hitachi 4800.

Additionally, the thickness of the reduced graphene oxide sheet was measured using Atomic Force Microscope (AFM) after the reduced graphene oxide sheet was spin-cast on a SiO₂ substrate, and the used AFM was Park Systems NX10.

### Formation of sealant layer on reduced graphene oxide layer on mechanical support layer

To further form a sealant layer on the outer side of the formed reduced graphene oxide layer, a polypropylene film (YoulChon Chemical) was applied to the outer side of the reduced graphene oxide layer by a bar coating method. Accordingly, a film for packaging a secondary battery including the polyethyleneterephthalate film as the mechanical support layer, the reduced graphene oxide layer, and the polypropylene film as the sealant layer stacked in that order was obtained.

### Comparative example 1

A film for packaging a secondary battery is manufactured by the same method as example 1 except that CuCl₂ was not added to the dispersion composition. It was found that the formed reduced graphene oxide layer was about 100 nm in thickness, the graphene oxide sheet of the layer was 1 to 4 nm in thickness, and the interlayer spacing between the graphene oxide sheets was about 0.3 to 0.4 nm.

### Comparative example 2

A polyethylene terephthalate (PET) film (LAMI-ACE, a laminating film) was prepared and used as a film for packaging a secondary battery.

### Comparative example 3

A polypropylene film as a sealant layer was applied to one surface of a polyethylene terephthalate (PET) film (LAMI-ACE, a laminating film) by a bar coating method and used as a film for packaging a secondary battery.

### Example 2

Artificial graphite as a negative electrode active material, carbon black as a conductive material, styrene butadiene rubber (SBR) as a binder and carboxymethylcellulose (CMC) as a thickening agent were mixed at a weight ratio of 96:1:2:1, and water was added to prepare a negative electrode slurry.

The negative electrode slurry was coated on one surface of a copper foil (current collector) in a loading amount of 3.6 mAh/cm². Subsequently, the current collector coated with the slurry was roll pressed, and dried in vacuum at about 130°C for 8 hours to manufacture a negative electrode having a negative electrode active material layer on the current collector.

### <Manufacture of positive electrode>

LiCoO₂ as a positive electrode active material, carbon black as a conductive material and polyvinylidene fluoride (PVdF) as a binder at a weight ratio of 96:2:2 were added to N-methylpyrrolidone (NMP) as a solvent to prepare a positive electrode active material slurry. The slurry was coated on one surface of a 15*µ*m thick aluminum current collector, dried, and roll pressed in the same condition as the negative electrode to manufacture a positive electrode. In this instance, the manufactured positive electrode was designed with 108% N/P ratio (discharge capacity ratio of negative to positive electrodes) (the amount of final positive electrode loading: 3.3 mAh/cm²).

### <Manufacture of pouch-type secondary battery>

LiPF₆ at the concentration of 1M was added to a non-aqueous electrolyte solvent of a mixture of ethylene carbonate and ethylmethyl carbonate at a volume ratio of 3:7 to prepare a non-aqueous electrolyte solution.

An electrode assembly was manufactured by placing a polyolefin separator between the manufactured positive electrode and a negative electrode.

A pouch case for a secondary battery as shown in FIG. 1 was manufactured using the film for packaging a secondary battery of example 1.

The electrode assembly was received in the pouch case for a secondary battery, and the prepared electrolyte solution was added to manufacture a secondary battery.

### Comparative example 4

A secondary battery was manufactured by the same method as example 2 except that the film for packaging a secondary battery of comparative example 3 was used.

### Evaluation 1: Measurement of vapor barrier property

To measure the vapor barrier property, each film manufactured in example 1 and comparative examples 1 and 2 was prepared 10 x 10 cm in size, tailored and mounted in a water vapor transmission rate tester (Sejin Test, Model: SJTM-014). Subsequently, dry nitrogen gas containing no water vapor was introduced into one surface of a packaging for a flexible secondary battery, and water vapor was introduced into the other surface. In this instance, to prevent gases introduced into the two surfaces of the packaging for a flexible secondary battery from being mixed with each other, two spaces in which the gases flow were isolated from each other. Meanwhile, during the test, the temperature was set to 38 °C, and the humidity was set to 100 %RH, and these conditions were maintained. Additionally, an amount of water vapor on the one surface in which dry nitrogen gas flows was measured for 24 hours using a humidity sensor. An amount of water vapor per unit area penetrating the pouch film for 24 hours was obtained by dividing the amount of water vapor by the area of the one surface, and this was evaluated as a water vapor transmission rate (WVTR). The results are shown in Table 1.

As a result, as presented in the following Table 1, it was found that the film for packaging a secondary battery of example 1 had much improved water vapor transmission rate compared to each of the films for packaging a secondary battery of comparative examples 1 and 2. Through this, it can be seen that the film for packaging a secondary battery with electrostatic interaction of the reduced graphene oxide sheets of the reduced graphene oxide layer shows more effective vapor barrier than the film for packaging a secondary battery with no electrostatic interaction.

**[Table 1]**

| | Example 1 | Comparative example 1 | Comparative example 2 |
|---|---|---|---|
| WVTR (g/m²/day) | 9.2 x 10⁻³ | 1.38 x 10⁻¹ | 3.0 |

### Evaluation 2: Measurement of battery performance

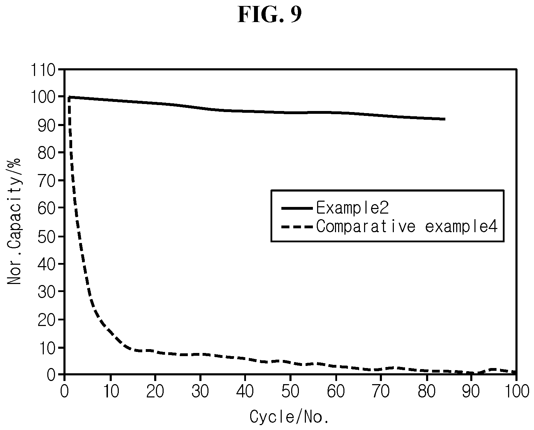

For each secondary battery manufactured in example 2 and comparative example 4, a charge/discharge test was performed at the current density of 0.5 C in the voltage condition between 2.5 V to 4.2 V, and the results are shown in FIG. 9. As can be seen from FIG. 9, it was found that the secondary battery manufactured in comparative example 4 had a significant reduction in capacity before 10th cycle, while the secondary battery manufactured in example 2 continuously showed high capacity.

## Claims

1. A film (200) for packaging a secondary battery by covering an entire outer surface of a secondary battery electrode assembly, the film comprising:
a mechanical support layer (210);
a reduced graphene oxide layer (230) disposed on an outer side of the mechanical support layer (210), and including a plurality of reduced graphene oxide sheets (2320); and
a sealant layer (250) disposed on an outer side of the reduced graphene oxide layer (230);
**characterized in that**
the plurality of reduced graphene oxide sheets (2320) in the reduced graphene oxide layer (230) form electrostatic interaction (2330) between adjacent reduced graphene oxide sheets (2320) via a metal ion.

2. The film (200) according to claim 1, wherein the reduced graphene oxide sheets (2320) have a structure of one to three layers of reduced graphene oxide particles (2310).

3. The film (200) according to claim 1, wherein the reduced graphene oxide sheets (2320) have a thickness in the range of 0.002 µm to 10 µm.

4. The film (200) according to claim 1, wherein the metal ion is at least one of Li⁺, K⁺, Ag⁺, Mg²⁺, Ca²⁺, Cu²⁺, Pb²⁺, Co²⁺, Al³⁺, Cr³⁺ and Fe³⁺.

5. The film (200) according to claim 1, further comprising an adhesive layer (220, 240) between the reduced graphene oxide layer (230) and the sealant layer (250), and/or between the mechanical support layer (210) and the reduced graphene oxide layer (230).

6. The film (200) according to claim 1, wherein the reduced graphene oxide layer (230) has a thickness in the range of 20 nm to 30 µm.

7. The film (200) according to claim 1, wherein the reduced graphene oxide sheets (2320) have an interlayer spacing in the range of 0.3 nm to 5.0 nm.

8. The film (200) according to claim 1, which has a water vapor transmission rate (WVTR) in the range of 10⁻⁶ g/m²/day to 10⁻³ g/m²/day.

9. A method for manufacturing a film (200) as defined in claim 1, comprising:
preparing a mechanical support layer (210);
coating a dispersion composition comprising dispersed graphene oxide (GO) particles and a dispersed metal salt on an outer side of the mechanical support layer (210) and drying to form a graphene oxide layer;
reducing the graphene oxide layer to form a reduced graphene oxide (rGO) layer (230); and
forming a sealant layer (250) on an outer side of the reduced graphene oxide layer (230).

10. The method according to claim 9, wherein a metal ion of the metal salt is at least one of Li⁺, K⁺, Ag⁺, Mg²⁺, Ca²⁺, Cu²⁺, Pb²⁺, Co²⁺, Al³⁺, Cr³⁺ and Fe³⁺.

11. The method according to claim 9, wherein the metal salt is present in an amount of 0.01 to 10 weight% based on the weight of the graphene oxide particles.

12. The method according to claim 9, wherein the graphene oxide layer is reduced by hydriodic acid or vitamin C.

13. The method according to claim 9, further comprising forming an adhesive layer (220, 240) between the reduced graphene oxide layer (230) and the sealant layer (250), and/or between the mechanical support layer (210) and the reduced graphene oxide layer (230).

14. A secondary battery comprising:
an electrode assembly (700); and
the film (770) according to claim 1 wrapped around an outer surface of the electrode assembly.

15. The secondary battery according to claim 14, which is a pouch-type secondary battery or a flexible secondary battery.

## Patentansprüche

1. Folie (200) zum Verpacken einer Sekundärbatterie durch Bedecken einer gesamten Außenfläche einer Sekundärbatterie-Elektrodenanordnung, wobei die Folie umfasst:
eine mechanische Trägerschicht (210);
eine Schicht (230) aus reduziertem Graphenoxid, die auf einer Außenseite der mechanischen Trägerschicht (210) angeordnet ist und eine Vielzahl von Lagen (2320) aus reduziertem Graphenoxid enthält; und
eine Versiegelungsschicht (250), die auf einer Außenseite der Schicht aus reduziertem Graphenoxid (230) angeordnet ist;
**dadurch gekennzeichnet, dass** die Vielzahl von Lagen aus reduziertem Graphenoxid (2320) in der Schicht aus reduziertem Graphenoxid (230) eine elektrostatische Wechselwirkung (2330) zwischen benachbarten Lagen aus reduziertem Graphenoxid (2320) via ein Metallion bilden.

2. Folie (200) gemäß Anspruch 1, wobei die Lagen aus reduziertem Graphenoxid (2320) eine Struktur aus einer bis drei Schichten von Teilchen aus reduziertem Graphenoxid (2310) aufweisen.

3. Folie (200) gemäß Anspruch 1, wobei die Lagen aus reduziertem Graphenoxid (2320) eine Dicke im Bereich von 0,002 µm bis 10 µm aufweisen.

4. Folie (200) gemäß Anspruch 1, wobei das Metallion mindestens eines von Li⁺, K⁺, Ag⁺, Mg²⁺, Ca²⁺, Cu²⁺, Pb²⁺, Co²⁺, Al³⁺, Cr³⁺ und Fe³⁺ ist.

5. Folie (200) gemäß Anspruch 1, ferner umfassend eine Klebstoffschicht (220, 240) zwischen der Schicht aus reduziertem Graphenoxid (230) und der Versiegelungsschicht (250) und/oder zwischen der mechanischen Trägerschicht (210) und der Schicht aus reduziertem Graphenoxid (230).

6. Folie (200) gemäß Anspruch 1, wobei die Schicht aus reduziertem Graphenoxid (230) eine Dicke im Bereich von 20 nm bis 30 µm aufweist.

7. Folie (200) gemäß Anspruch 1, wobei die Lagen aus reduziertem Graphenoxid (2320) einen Zwischenabstand im Bereich von 0,3 nm bis 5,0 nm aufweisen.

8. Folie (200) gemäß Anspruch 1, die eine Wasserdampfdurchlässigkeitsrate (WVTR) im Bereich von 10⁻⁶ g/m²/Tag bis 10⁻³ g/m²/Tag aufweist.

9. Verfahren zur Herstellung einer Folie (200) wie in Anspruch 1 definiert, umfassend:
Herstellen einer mechanischen Trägerschicht (210);
Auftragen einer Dispersionszusammensetzung, die dispergierte Graphenoxid (GO)-Teilchen und ein dispergiertes Metallsalz umfasst, auf eine Außenseite der mechanischen Trägerschicht (210) und Trocknen, um eine Schicht aus Graphenoxid zu bilden;
Reduzieren der Schicht aus Graphenoxid, um eine Schicht aus reduziertem Graphenoxid (rGO) (230) zu bilden; und
Bilden einer Versiegelungsschicht (250) auf einer Außenseite der Schicht aus reduziertem Graphenoxid (230).

10. Verfahren gemäß Anspruch 9, wobei ein Metallion des Metallsalzes mindestens eines von Li⁺, K⁺, Ag⁺, Mg²⁺, Ca²⁺, Cu²⁺, Pb²⁺, Co²⁺, Al³⁺, Cr³⁺ und Fe³⁺ ist.

11. Verfahren gemäß Anspruch 9, wobei das Metallsalz in einer Menge von 0,01 bis 10 Gew.-%, bezogen auf das Gewicht der Teilchen aus Graphenoxid, vorhanden ist.

12. Verfahren gemäß Anspruch 9, wobei die Schicht aus Graphenoxid durch Iodwasserstoffsäure oder Vitamin C reduziert wird.

13. Verfahren gemäß Anspruch 9, ferner umfassend das Bilden einer Klebstoffschicht (220, 240) zwischen der Schicht aus reduziertem Graphenoxid (230) und der Versiegelungsschicht (250) und/oder zwischen der mechanischen Trägerschicht (210) und der Schicht aus reduziertem Graphenoxid (230).

14. Sekundärbatterie, umfassend:
eine Elektrodenanordnung (700); und
die Folie (770) gemäß Anspruch 1, die um eine Außenfläche der Elektrodenanordnung gewickelt ist.

15. Sekundärbatterie gemäß Anspruch 14, die eine beutelartige Sekundärbatterie oder eine flexible Sekundärbatterie ist.

## Revendications

1. Film (200) d'emballage d'une batterie secondaire pour recouvrir toute une surface externe d'un ensemble électrode de batterie secondaire, le film comprenant :
une couche (210) de support mécanique ;
une couche (230) d'oxyde de graphène réduit disposée sur un côté externe de la couche (210) de support mécanique, et incluant une pluralité de feuilles (2320) d'oxyde de graphène réduit ; et
une couche (250) d'étanchéité disposée sur un côté externe de la couche (230) d'oxyde de graphène réduit ;
**caractérisé en ce que** la pluralité de feuilles (2320) d'oxyde de graphène réduit dans la couche (230) d'oxyde de graphène réduit forment une interaction (2330) électrostatique entre des feuilles (2320) d'oxyde de graphène réduit adjacentes via un ion métallique.

2. Film (200) selon la revendication 1, dans lequel les feuilles (2320) d'oxyde de graphène réduit ont une structure d'une à trois couches de particules (2310) d'oxyde de graphène réduit.

3. Film (200) selon la revendication 1, dans lequel les feuilles (2320) d'oxyde de graphène réduit ont une épaisseur dans la plage de 0,002 µm à 10 µm.

4. Film (200) selon la revendication 1, dans lequel l'ion métallique est au moins un parmi Li⁺, K⁺, Ag⁺, Mg²⁺, Ca²⁺, Cu²⁺, Pb²⁺, Co²⁺, Al³⁺, Cr³⁺ et Fe³⁺.

5. Film (200) selon la revendication 1, comprenant en outre une couche (220, 240) adhésive entre la couche (230) d'oxyde de graphène réduit et la couche (250) d'étanchéité, et/ou entre la couche (210) de support mécanique et la couche (230) d'oxyde de graphène réduit.

6. Film (200) selon la revendication 1, dans lequel la couche (230) d'oxyde de graphène réduit a une épaisseur dans la plage de 20 nm à 30 µm.

7. Film (200) selon la revendication 1, dans lequel les feuilles (2320) d'oxyde de graphène réduit ont un espacement intercouche dans la plage de 0,3 nm à 5,0 nm.

8. Film (200) selon la revendication 1, qui a un taux de transmission de vapeur d'eau (WVTR) dans la plage de 10⁻⁶ g/m²/jour à 10⁻³ g/m²/jour.

9. Procédé de fabrication d'un film (200) selon la revendication 1, comprenant :
la préparation d'une couche (210) de support mécanique ;
le revêtement d'une composition de dispersion comprenant des particules d'oxyde de graphène (GO) dispersées et un sel métallique dispersé sur un côté externe de la couche (210) de support mécanique et le séchage pour former une couche d'oxyde de graphène ;
la réduction de la couche d'oxyde de graphène pour former une couche (230) d'oxyde de graphène réduit (rGO) ; et
la formation d'une couche (250) d'étanchéité sur un côté externe de la couche (230) d'oxyde de graphène réduit.

10. Procédé selon la revendication 9, dans lequel un ion métallique du sel métallique est au moins un parmi Li⁺, K⁺, Ag⁺, Mg²⁺, Ca²⁺, Cu²⁺, Pb²⁺, Co²⁺, Al³⁺, Cr³⁺ et Fe³⁺.

11. Procédé selon la revendication 9, dans lequel le sel métallique est présent en une quantité de 0,01 à 10 % en poids sur la base du poids des particules d'oxyde de graphène.

12. Procédé selon la revendication 9, dans lequel la couche d'oxyde de graphène est réduite par de l'acide iodhydrique ou de la vitamine C.

13. Procédé selon la revendication 9, comprenant en outre la formation d'une couche (220, 240) adhésive entre la couche (230) d'oxyde de graphène réduit et la couche (250) d'étanchéité, et/ou entre la couche (210) de support mécanique et la couche (230) d'oxyde de graphène réduit.

14. Batterie secondaire comprenant :
un ensemble (700) électrode ; et
le film (770) selon la revendication 1 enveloppé autour d'une surface externe de l'ensemble électrode.

15. Batterie secondaire selon la revendication 14, qui est une batterie secondaire de type poche ou une batterie secondaire flexible.
